(19) Europäisches Patentamt / European Patent Office / Office européen des brevets

(11) **EP 3 274 662 B1**

(12) **FASCICULE DE BREVET EUROPEEN**

(45) Date de publication et mention de la délivrance du brevet:
**25.12.2019 Bulletin 2019/52**

(51) Int Cl.:
**G01D 5/353** (2006.01)   **G01H 9/00** (2006.01)
**G01L 1/24** (2006.01)

(21) Numéro de dépôt: **16714782.6**

(22) Date de dépôt: **17.03.2016**

(86) Numéro de dépôt international:
**PCT/EP2016/055866**

(87) Numéro de publication internationale:
**WO 2016/150824 (29.09.2016 Gazette 2016/39)**

(54) **CAPTEUR A FIBRE OPTIQUE DISTRIBUE D'ETAT DE CONTRAINTE**

VERTEILTER FASEROPTISCHER SENSOR ZUR ERFASSUNG EINES SPANNUNGSZUSTANDS

DISTRIBUTED OPTICAL FIBRE SENSOR FOR SENSING STRESS STATE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.03.2015 FR 1500563**

(43) Date de publication de la demande:
**31.01.2018 Bulletin 2018/05**

(73) Titulaires:
• **Thales**
  **92400 Courbevoie (FR)**
• **Centre National de la Recherche Scientifique**
  **75016 Paris (FR)**
• **Université Nice Sophia Antipolis**
  **06103 Nice Cedex 2 (FR)**

(72) Inventeurs:
• **MOLIN, Stéphanie**
  **91210 Draveil (FR)**
• **DOISY, Martine**
  **06130 Grasse (FR)**
• **PEIGNE, Arnaud**
  **06250 Mougins (FR)**
• **RESIDORI, Stefania**
  **06160 Juan Les Pins (FR)**
• **BORTOLOZZO, Umberto**
  **06160 Juan Les Pins (FR)**
• **HUIGNARD, Jean-Pierre**
  **75013 Paris (FR)**
• **BOUFFARON, Renaud**
  **06600 Antibes (FR)**
• **DOLFI, Daniel**
  **91400 Orsay (FR)**

(74) Mandataire: **Esselin, Sophie et al**
**Marks & Clerk France**
**Conseils en Propriété Industrielle**
**Immeuble Visium**
**22 avenue Aristide Briand**
**94117 Arcueil Cedex (FR)**

(56) Documents cités:
EP-A1- 0 021 945   EP-A1- 1 043 632
US-A- 4 536 861   US-A1- 2011 320 147
US-B2- 7 668 411

• R. BOUFFARON ET AL: "All-optical acoustic array for underwater surveillance", PROCEEDINGS OF SPIE, vol. 8794, 20 mai 2013 (2013-05-20), page 87940N, XP055133779, ISSN: 0277-786X, DOI: 10.1117/12.2025798
• BORTOLOZZO U ET AL: "Beam coupling in photorefractive liquid crystal light valves; Photorefractive liquid crystal light valves", JOURNAL OF PHYSICS D: APPLIED PHYSICS, INSTITUTE OF PHYSICS PUBLISHING LTD, GB, vol. 41, no. 22, 21 novembre 2008 (2008-11-21), page 224007, XP020141029, ISSN: 0022-3727, DOI: 10.1088/0022-3727/41/22/224007

EP 3 274 662 B1

## Description

Le domaine de l'invention est celui des capteurs à fibre optique. Plus précisément, il concerne des capteurs aptes à détecter une perturbation à proximité de la fibre, permettant de localiser cette perturbation le long de la fibre en environnement bruité.

Les capteurs à fibre optique offrent des avantages considérables en matière de détection acoustique et de mesure de température. Ils permettent une interrogation longue distance (avec ou sans déport) et peuvent atteindre de très grandes sensibilités (capteurs répartis) ainsi qu'une résolution spatiale élevée (capteurs distribués).

La détection acoustique sous-marine présente un intérêt stratégique majeur pour les applications militaires (surveillance des côtes, détection/identification des sous-marins et bâtiments de surface) et civiles (biologie sous-marine, surveillance de structures offshore, études sismiques).

Les réseaux de capteurs à fibre optique répartis sont particulièrement adaptés à ces besoins. Ils sont basés sur une ou plusieurs fibres optiques comprenant plusieurs zones sensibles de quelques centimètres de longueur espacées qui constituent un réseau spatial de capteurs. Ces capteurs peuvent être multiplexés en longueur d'onde et/ou en temps. Les plus sensibles sont basés sur des réseaux de Bragg actifs (lasers DFB) ou passifs, couplés à un transducteur mécanique permettant de transformer la déformation due à l'onde de pression en une élongation longitudinale amplifiée et contrôlée de la fibre optique.

Ces derniers permettent d'atteindre des sensibilités inférieures au picostrain i.e. capables de détecter des variations relatives de la longueur de fibre de $\Delta L / L$ de l'ordre de $10^{-12}$.

Ces dernières années, la surveillance d'ouvrages (bâtiments, ponts, oléoducs et gazoducs...) a fait naître de nouveaux besoins, notamment une interrogation très longue distance (>50 km) avec des résolutions spatiales de quelques mètres à quelques centimètres. A cette fin, les capteurs à fibres optiques distribués offrent de grands avantages. Ils se réfèrent à l'ensemble des capteurs à fibres optiques pour lesquels la partie sensible est composée de toute la fibre optique monomode ou multimode. Un réseau spatial de « capteurs virtuels » le long de la fibre peut être reconstitué par traitement du signal optique. Le pas de ce réseau est déterminé par les caractéristiques du traitement du signal et présente donc l'avantage de pouvoir être ajustable electroniquement. La longueur du tronçon de fibre sur laquelle la mesure est moyennée pour chaque capteur « virtuel » dépend de la résolution spatial associé au traitement optique du signal qui porte la perturbation induite par la grandeur à mesurer Les capteurs distribués s'appuient sur les processus de diffusions élastique et inélastique dans les fibres optiques. Les systèmes les plus répandus utilisent le principe de réflectométrie optique dans le domaine temporel (OTDR). Les premiers systèmes consistaient en l'analyse de la rétrodiffusion Rayleigh d'une source optique large-bande comme décrit dans l'article de Farries, M.C.; Fermann, M.E.; Poole, S.B.; Townsend, J.E. « Distributed Temperature Sensor Using Holmium 3+ Doped Fiber ». In Proceedings of OFC, Reno, NV, USA, 19 January 1987.

D'autres approches basées sur le même principe ont vu le jour ces dernières années. Parmi celles-ci, on peut noter le principe de réflectométrie optique sensible à la phase (phase-OTDR) comme décrit dans l'article de Qin, Z.; Chen L.; Bao, X. « Wavelet denoising method for improving detection performance of distributed vibration sensor ». IEEE Photonics Technol. Lett. 2012, 24, 542-544, ainsi qu'une méthode pulsée hétérodyne décrite dans l'article de M.D. Mermelstein, A. Tveten, C.K. Kirkendall, and A. Dandridge, "Double-Pulse Heterodyne Rayleigh Backscattering in an Acoustically Driven Single-Mode Optical Fiber," NRL-FR-9932, 1999.

Par ailleurs, les architectures utilisant le principe de la diffusion Brillouin ont été très étudiées. Dans ce cas, c'est le décalage de la fréquence Brillouin, sensible à l'élongation longitudinale de la fibre optique (0.056 MHz/μ-strain) ainsi qu'à la température (1.26 MHz/°C), qui est mesuré. La configuration la plus simple utilise le principe de diffusion Brillouin spontanée (B-OTDR) comme décrit dans l'article de Horiguchi T, Shimizu K, Kurashima T, Tateda M, Koyamada Y., "Development of a distributed sensing Technique using Brillouin scattering" Journal of Lightwave Technology, 1995, 13(7): 1296-1302. Elle consiste en l'injection d'une impulsion pompe dans une fibre optique. Le décalage fréquentiel de l'onde Stokes rétrodiffusée, mesuré à l'aide d'une détection hétérodyne, permet la conversion en une élongation ou température, et la mesure du temps de vol permet la localisation.

D'autres approches utilisent le principe de diffusion Brillouin stimulée (B-OTDA), comme décrit dans les articles de Horiguchi T, Kurashima T, Tateda M., "A technique to measure distributed strain in optical fibers" IEEE Photonics Technology Letters, 1990, 2(5): 352-354, ou de Nikles M, Thevenaz L, Robert P A. « Simple distributed fiber sensor based on Brillouin gain spectrum analysis ». Optics Letters, 1996, 21 (10): 758-760. Elles nécessitent alors l'emploi de deux ondes optiques contra-propagatrices pompe et sonde. Dans certaines conditions d'accord de phase, leur interaction génère un réseau acoustique diffractant les photons de l'onde pompe vers l'onde sonde.

L'ensemble de ces approches temporelles peut être transposé au domaine fréquentiel. Dans ce cas, on parle de réflectométrie optique dans le domaine fréquentiel (OFDR). Dernièrement, une méthode originale a été proposée par Hotate et. al. consistant à moduler les deux signaux pompe et sonde afin de générer des fenêtres d'amplification dont la position et la largeur sont contrôlables via les paramètres de modulation, comme décrit dans l'article de Hotate, K.; Hasegawa, T. "Measurement of Brillouin gain spectrum distribution along an optical fiber with a high spatial resolution using a correlation-based technique-Proposal, experiment and simulation," IEICE Trans. Electron. 2000, E83-C, 405-411.

*Davies et al.* proposent une architecture du type OTDR basée sur l'utilisation d'une fibre optique multimode associée à un filtre spatial permettant de sélectionner le mode fondamental $LP_{01}$ de la fibre optique comme décrit dans le brevet *"Distributed vibration sensing system using multimode fiber,"* US 7,668,411 B2 (2010), mais sans tirer profit de l'information de phase contenue dans les modes d'ordres supérieurs.

En parallèle, l'holographie dynamique a été particulièrement étudiée dans les cristaux photo-réfractifs et décrite notamment dans l'article de Kamshilin, A. A., Romashko, R. V. and Kulchin, Y. N., "Adaptive interferometry with photorefractive crystal," J. Appl. Phys. 105, 031101 (2009). Une démonstration expérimentale de mesure de déphasage utilisant une fibre optique multimode et un cristal de tellurure de cadmium (CdTe) a été proposée dans l'article de Salvatore Di Girolamo, Alexei A. Kamshilin, Roman V. Romashko, Yuriy N. Kulchin, and Jean C. Launay, "Sensing of multimode-fiber strain by a dynamic photorefractive hologram," Opt. Lett. 32, 1821-1823 (2007), cependant, sans un filtrage efficace des perturbations lentes car n'utilisant pas une valve optique à cristaux liquides comme milieu non-linéaire qui peut garantir la remise en phase et l'insensibilité aux perturbations lentes de l'environnement avec des intensités lumineuses de trois ordres de grandeur inférieures.

De manière générale, une valve optique à cristaux liquides est constituée d'une fine couche de cristal liquide nématique contenue entre un substrat photoconducteur et une fenêtre en verre sur lesquels sont déposées deux électrodes transparentes. Les cristaux liquides sont des molécules organiques anisotropes caractérisées par leur grande biréfringence. Dans leur phase nématique, ils sont en moyenne orientés selon une direction préférentielle. Sous l'action d'un champ électrique (appliqué entre les deux électrodes), les molécules se réorientent et induisent un changement de l'indice optique extraordinaire. La modification de la conductivité du matériau (proportionnelle à l'intensité optique) induit une chute de tension à l'interface entre le photoconducteur et le cristal liquide conduisant à la réorientation des molécules le constituant. Il s'en suit une modification de la biréfringence et par conséquent un déphasage optique. La valve optique peut donc être considérée comme un milieu à effet Kerr optique. Ce composant a principalement été étudié à des fins de limiteur optique pour les lasers de forte puissance et notamment décrit dans l'article de Salvatore Di Girolamo, Alexei A. Kamshilin, Roman V. Romashko, Yuriy N. Kulchin, and Jean C. Launay, "Sensing of multimode-fiber strain by a dynamic photorefractive hologram," Opt. Lett. 32, 1821-1823 (2007).

L'holographie adaptative dans une valve optique à cristaux liquides met en jeu le principe du mélange à deux ondes. Ce processus supprime le piston de phase (déphasage uniforme du front d'onde, terme communément utilisé) de l'interféromètre. Par conséquent, la détection est linéaire sans nécessiter d'ajouter une boucle de rétroaction. Une première démonstration expérimentale, basée sur ce principe, a permis de démontrer un interféromètre dont l'intensité de sortie est très sensible à la différence de phase entre les bras comme décrit dans l'article de Bortolozzo, U., Residori, S. and Huignard, J. P., "Picometer detection by adaptive holographic interferometry in a liquid-crystal light valve," Opt. Lett. 34, 2006-2008 (2009).

Ce même principe a permis la réalisation d'un accéléromètre ultrasensible basé sur l'effet Sagnac et décrit dans l'article de Bortolozzo, U., Rubin, J., Residori, S. and Huignard, J. P., "Sagnac interferometer with adaptive nonlinear detection," Opt. Lett. 36, 520 (2011).

Le document US 4,536,861 concerne un hydrophone à fibre optique.

Dans ce contexte, la présente invention a pour objet un capteur distribué intégrant une fibre optique de préférence multimode et un interféromètre adaptatif comprenant une valve à cristaux liquides comme milieu de recombinaison, permettant la détection de contraintes dynamiques faibles dans un environnement bruité, alors qu'actuellement les perturbations lentes de l'environnement imposent des contraintes sur les architectures de capteur utilisées et que la détection distribuée par fibre optique est généralement incompatible d'une grande sensibilité.

Le capteur de la présente invention utilise une fibre optique comme partie sensible associée à une détection par holographie adaptative dans une valve optique (permettant de filtrer les basses fréquences, correspondant au bruit dû à l'environnement) et intégrant une architecture d'interrogation compatible de capteur distribué.

Plus précisément la présente invention a pour objet un capteur à fibre optique distribué d'état de contrainte dynamique, ledit capteur comprenant :

- un ensemble optique comportant au moins un laser émettant à une longueur d'onde λ, ledit ensemble optique étant configuré pour générer une série d'impulsions optiques $I_{pi}$ ;
- une fibre optique présentant une première extrémité et une seconde extrémité et de longueur optique L ;
- un système optique configuré pour :

  ○ injecter par ladite première extrémité au moins ladite série d'impulsions optiques $I_{pi}$ ;
  ○ recevoir au niveau de ladite première extrémité au moins une série d'impulsions optiques de sortie, une impulsion optique de sortie $I_{psi}$ étant porteuse de l'intensité de réflexion desdites extrémités de la fibre et de l'intensité rétrodiffusée le long de ladite fibre ;
  ○ générer au moins un faisceau de référence continu $F_r$ ou des impulsions optiques de référence $I_{pri}$ à partir

dudit ensemble optique ou desdites impulsions optiques de sortie $I_{psi}$ ;
○ réaliser une série de zones d'interférences correspondant à l'interférence entre ledit faisceau de référence $F_r$ ou une impulsion de référence $I_{pri}$ et une impulsion optique signal $I_{psiS}$ issue d'une impulsion optique de sortie $I_{psi}$ ;

- un détecteur holographique comprenant :

○ une valve optique à cristal liquide LCLV comprenant une couche de cristal liquide disposée entre deux substrats, un des substrats comprenant un matériau photoconducteur pour ladite longueur d'onde d'émission $\lambda$ , ladite valve LCLV étant disposée de sorte qu'elle recouvre au moins partiellement lesdites zones d'interférence, ladite valve étant configurée pour réaliser des hologrammes à partir desdites zones d'interférence ;
○ au moins un détecteur optique configuré pour détecter des signaux optiques de sortie diffractés par lesdits hologrammes.

Selon des variantes de l'invention, l'ensemble optique comprenant au moins un laser émettant à une longueur d'onde $\lambda$, comporte des premiers moyens pouvant être un premier modulateur acousto-optique, pour générer des impulsions optiques.

Selon des variantes de l'invention, le capteur comporte au moins :

- un circulateur positionné :

○ en sortie dudit ensemble optique comprenant au moins un laser émettant à une longueur d'onde $\lambda$ ;
○ en entrée de ladite fibre optique ;
○ en entrée de ladite valve optique à cristal liquide LCLV ;

- un coupleur situé en sortie de ladite fibre pour créer deux voies optiques porteuses d'impulsions optiques de sortie ;
- des moyens pour retarder lesdites impulsions de sortie de fibre sur l'une desdites deux voies de manière à créer une voie signal porteuse d'impulsions optiques signal et une voie de référence porteuse d'impulsions optiques de référence pour générer lesdites zones d'interférences sur ladite valve optique.

Selon des variantes de l'invention, le capteur comporte en outre des seconds moyens pouvant être un second modulateur acousto-optique, situés en sortie du circulateur et en entrée du coupleur permettant de sélectionner des portes de durée $2\Delta L/c$ avec c la vitesse de la lumière dans le vide et $\Delta L/2$ la longueur d'une zone sensible définie entre une position $A_i$ et une position $B_i$ au niveau de ladite fibre et référencée depuis ladite première extrémité, pour ne laisser interférer que des ondes rétrodiffusées provenant d'une zone sensible de ladite fibre à la fois ;

- les moyens pour retarder lesdites impulsions de sortie introduisant une longueur supplémentaire à parcourir $\Delta L$ ;
- les impulsions sont séparées d'une durée $t_R$, telle que $t_R > 2L/c$ la durée desdites impulsions $t_p$ étant telle que $t_p > \Delta L/c$ et $t_R < t_{off}$ avec $t_{off}$, le temps de réponse des cristaux liquides.

Selon des variantes de l'invention, le capteur comporte en outre :

- des seconds moyens pouvant être un second modulateur acousto-optique, situés en sortie de ladite valve optique et placés en entrée dudit détecteur optique, permettant de sélectionner des portes de durée : $t_R - (t_p + \Delta L/c)$ ;
- les moyens pour retarder lesdites impulsions introduisant une longueur supplémentaire à parcourir de $\Delta L$ avec $\Delta L/2$ la longueur d'une zone sensible définie entre une position $A_i$ et une position $B_i$ au niveau de ladite fibre et référencée depuis ladite première extrémité ;
- les impulsions sont séparées d'une durée $t_R$, telle que $t_R > 2L/c$ la durée desdites impulsions $t_p$ étant telle que $t_p > \Delta L/c$ et $t_R < t_{off}$ avec $t_{off}$, le temps de réponse des cristaux liquides ;
- lesdites portes permettant de filtrer les intensités de réflexion desdites extrémités de la fibre et conserver une partie de l'intensité rétrodiffusée le long de ladite fibre ;
- une unité de traitement numérique située en sortie de détecteur optique pour analyser les différentes zones actives sondées.

Le signal acquis sur la photodiode est converti en signal électrique. Un échantillonnage de ce signal est effectué permettant d'analyser l'information comprise dans un échantillon (fenêtre temporelle) et correspondant au signal de phase subi par la fibre à la distance z correspondante, référencée par rapport à une extrémité de la fibre.
Selon des variantes de l'invention, le capteur comprend en outre :

- un ensemble laser dit d'écriture comprenant au moins un laser émettant une série d'impulsions dites d'écriture à une fréquence de pompe $\omega_p$ et un faisceau laser émettant une série d'impulsions dites d'écriture à une fréquence signal $\omega_s$ différente de la fréquence $\omega_p$ ;
- le système optique étant configuré :

  ∘ pour injecter par ladite première extrémité lesdites séries d'impulsions d'écriture aux fréquences ωp et ωs, inscrivant au moins un élément de réseau Brillouin dans ladite fibre optique ;
  ∘ pour injecter ladite série d'impulsions issues dudit ensemble optique comportant au moins un laser émettant à une longueur d'onde $\lambda_s$ correspondant à un faisceau laser de lecture à ladite fréquence signal $\omega_s$ ;
  ∘ la position $Z_r$ de l'écriture dudit élément de réseau Brillouin étant référencée par rapport à la seconde extrémité de ladite fibre et étant réglée par le décalage temporel entre deux impulsions d'écriture aux fréquences $\omega_p$ et $\omega_s$.

Selon des variantes de l'invention, l'ensemble laser d'écriture comprend :

- ledit laser émettant un faisceau laser ;
- des moyens pour diviser ledit faisceau en deux voies ;
- des moyens pour décaler la fréquence pompe $\omega_p$ vers une fréquence signal $\omega_s$ sur l'une des voies ;
- des moyens pour générer des impulsions sur les deux voies optiques décalées en fréquence pouvant être de type modulateurs acousto-optiques.

Selon des variantes de l'invention, ledit système optique est configuré pour que ledit faisceau de référence $F_r$ ou lesdites impulsions de référence $I_{pri}$ interfère(nt) en entrée de ladite valve optique à cristal liquide sans avoir été injecté(es) dans ladite fibre optique avec lesdites impulsions optiques signal $I_{psiS}$, issues desdites impulsions optiques injectées puis propagées dans ladite fibre.

Selon des variantes de l'invention, ledit système optique est configuré pour que ledit faisceau de référence $F_r$ ou lesdites impulsions de référence $I_{pri}$ interfére(nt) en entrée de ladite valve optique à cristal liquide en ayant été injecté(es) dans ladite fibre optique avec lesdites impulsions optiques signal $I_{psiS}$, issues desdites impulsions optiques injectées puis propagées dans ladite fibre.

Selon des variantes de l'invention, la seconde extrémité de la fibre comporte un traitement réfléchissant.

Selon des variantes de l'invention, ladite fibre est monomode.

Selon des variantes de l'invention, ladite fibre est multimode.

Selon des variantes de l'invention, la longueur d'onde d'émission de l'ensemble optique est égale à 1,5 $\mu$m.

L'invention sera mieux comprise et d'autres avantages apparaîtront à la lecture de la description qui va suivre donnée à titre non limitatif et grâce aux figures annexées parmi lesquelles :

- la figure 1 illustre la recombinaison des signaux de référence et signal sur une valve optique à cristaux liquides formant ainsi un réseau d'intensité, dans un capteur à fibre distribué de l'invention ;
- la figure 2 illustre un premier exemple de réalisation d'un capteur à fibre distribué selon l'invention ;
- les figures 3a et 3b sont relatives à un second exemple de réalisation d'un capteur à fibre distribué selon l'invention ;
- les figures 4a à 4c sont relatives à un troisième exemple de réalisation d'un capteur à fibre distribué selon l'invention.

Le capteur de la présente invention à fibre optique distribué (fibre uniforme sur toute sa longueur) permet de tirer profit du principe de démodulation de phase avec une mesure distribuée et présente les principaux avantages suivants en raison de l'interféromètre adaptatif qu'il intègre et qui sont notamment :

- l'insensibilité aux variations lentes de phase des ondes qui interfèrent (donc un filtrage des bruits basses fréquence) ;
- la capacité de démoduler un front d'onde complexe (par exemple issu d'un speckle provenant d'une fibre multimode, ce qui permet d'utiliser une fibre multimode comme capteur, qui, par rapport à une fibre monomode, et pour la même longueur de zone sensible, donne un gain en sensibilité lié aux nombres de modes excités).

Le capteur de la présente invention comprend au moins une source optique cohérente, et des moyens pour générer deux ondes optiques : une onde de référence $E_R$ à la fréquence $\omega_R$ et une onde signal $E_s$ à la fréquence $\omega_s$, injectée dans la fibre optique et analysée en sortie de fibre après propagation et rétro-propagation dans ladite fibre.

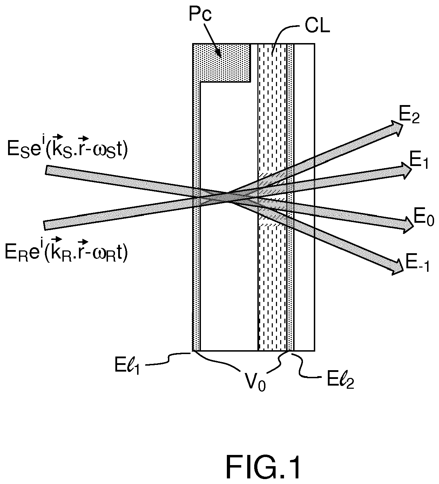

Chaque mode de l'onde signal subit les perturbations de phase intégrées le long de la fibre optique. L'onde de référence et l'onde signal sont recombinées sur une valve optique à cristaux liquides formant ainsi un réseau d'intensité comme illustré en figure 1, qui met en évidence le photoconducteur PC et la cellule à cristaux liquides CL, une tension $V_0$ étant appliquée entre deux électrodes $EI_1$ et $EI_2$.

La valve optique se comportant comme un milieu à effet Kerr optique, le réseau d'intensité est transféré en hologramme de phase, avec pour durée d'enregistrement, le temps de réponse du cristal liquide. En conséquence, l'hologramme s'adapte à toutes les perturbations de phase lentes devant son temps d'enregistrement, en se ré-inscrivant continument en fonction des modifications lentes de la figure d'interférence. Les cristaux liquides ont un temps de réponse de l'ordre de la centaine de millisecondes pour des épaisseurs de l'ordre de la dizaine de micromètres. Compte-tenu de ces dimensions caractéristiques, la diffraction opère en régime de Raman-Nath. Il en résulte que les ondes de référence et signal vont diffracter sur l'hologramme de phase induisant plusieurs ordres diffractés $E_1$, $E_2$, $E_{-1}$.

Pour illustrer ce phénomène, les Demandeurs ont considéré l'ordre diffracté dans la direction de l'onde de référence. L'onde résultante après la valve optique est constituée de la partie transmise de l'onde de référence et de la partie diffractée de l'onde signal. Ces deux ondes, ont le même front d'onde pour les variations de phase dont le temps caractéristique est supérieur au temps de réponse des cristaux liquides. Le battement de ces deux signaux optiques sur une photodiode (qui convertit les modulations de phase en modulation d'intensité) permet donc la démodulation de la perturbation de phase tout en s'affranchissant des perturbations lentes. De plus, le caractère multimode permet de réaliser une moyenne sur l'ensemble des modes de propagation et d'augmenter, *in fine,* le rapport signal sur bruit. Le calcul analytique présenté ci-dessous permet de démontrer ce principe.

Les Demandeurs ont procédé au calcul analytique du gain en sensibilité et ont évalué la puissance diffractée dans la direction de la référence.

Pour se faire, ils ont étudié le phénomène d'auto-diffraction dans une valve optique à cristaux liquides (LCLV) entre une onde de référence $E_R$ et une onde issue d'une fibre optique multimode $E_s$. L'onde signal $E_S$ se décompose en la somme des modes guidés par la fibre optique. Ces derniers sont tous modulés en phase et les Demandeurs se sont plus particulièrement intéressés à la conversion phase-amplitude. Les résultats présentés ci-après font l'hypothèse que les modes sont orthogonaux entre eux et qu'ils sont tous polarisés suivant l'axe directeur des cristaux liquides.

L'onde de référence s'écrit :

$$E_R = A_R e^{j\vec{k}_R \cdot \vec{r}} + c.c. \qquad (1.1)$$

Avec c.c : complexe conjugué correspondant au même terme que le premier terme dans la somme en remplaçant j par -j

L'onde signal s'écrit :

$$E_S = \sum_{m=1}^{M} E_m + c.c. = \sum_{m=1}^{M} A_m e^{j\left(\vec{\beta}_m \cdot \vec{r} + \phi_m + \Delta\phi_m sin(\Omega t)\right)} + c.c. \qquad (1.2)$$

Où M est le nombre de mode, m est l'indice du mode considéré, $\Phi_m$ est un déphasage relatif entre les modes et $\Delta\Phi_m$ est l'amplitude de la modulation de phase à la fréquence $\Omega$.

En régime stationnaire, l'indice de réfraction dans la valve n'est sensible qu'aux variations lentes devant son temps de réponse $\tau$. Ce dernier se met sous la forme :

$$n = n_0 + n_2 I_{BF} \qquad (1.3)$$

où $I_{BF}$ est la contribution basse-fréquence du réseau d'intensité entre $E_R$ et $E_S$ :

$$I_{BF} = |E_R + E_S|^2_{BF} \qquad (1.4)$$

Par conséquent, il est nécessaire de déterminer la contribution BF de l'onde signal. On utilise pour cela l'identité de Jacobi-Anger. L'expression du champ optique pour chaque mode m s'écrit :

$$E_m = A_m e^{j\left(\vec{\beta}_m \cdot \vec{r} + \phi_m\right)} \left[ J_0(\Delta\phi_m) + \sum_{k \neq 0}^{K} J_k(\Delta\phi_m) e^{jk\Omega t} \right] \qquad (1.5)$$

où les fonctions $J_k(x)$ sont les fonctions de Bessel de 1$^{ère}$ espèce d'ordre k.

En conclusion, en injectant l'équation (3.5) dans l'équation (3.4), il est possible de montrer que l'intensité basse fréquence du réseau d'intensité devient :

$$I_{BF} = |E_R|^2 + \sum_{m=1}^{M} |E_m|^2 \qquad (1.6)$$
$$+ 2 \sum_{m=1}^{M} A_m A_R J_0(\Delta\phi_m) \cos\left(\left(\vec{\beta}_m - \vec{k}_R\right) \cdot \vec{r} + \phi_m\right)$$

Compte tenu des dimensions caractéristiques de la valve à cristaux liquides LCLV, la diffraction opère en régime de Raman-Nath. Le champ optique en sortie s'écrit alors comme le produit du champ optique incident avec le coefficient de transmission de la valve :

$$E_{out} = T E_{in} = e^{jnk_0 d} E_{in} \qquad (1.7)$$

avec :

$$E_{in} = E_S + E_R \qquad (1.8)$$

En posant :

$$\begin{cases} \gamma = k_0 d \left[ n_0 + n_2 |E_R|^2 + n_2 \sum_{m=1}^{M} |E_m|^2 \right] \\ \chi_m = 2k_0 d n_2 J_0(\Delta\phi_m) A_m A_R \end{cases} \qquad (1.9)$$

Le coefficient de transmission peut être mis alors sous la forme :

$$T = e^{j\gamma} \prod_{m=1}^{M} e^{j\chi_m \cos\left(\left(\vec{\beta}_m - \vec{k}_R\right) \cdot \vec{r} + \phi_m\right)} \qquad (1.10)$$

En utilisant l'identité de Jacobi-Anger, il est possible d'exprimer le champ diffracté dans la direction de l'onde de référence sous la forme :

$$E_d = \left\{ A_R \prod_{m=1}^{M} J_0(\chi_m) \right. \qquad (1.11)$$
$$\left. + i \sum_{m=1}^{M} J_1(\chi_m) \left[ \prod_{\substack{k=1 \\ k \neq m}}^{K} J_0(\chi_k) \right] e^{j\Delta\phi_m \sin(\Omega t)} \right\} e^{j(\vec{k}_R \cdot \vec{r} + \gamma)}$$

Afin d'établir une première tendance sur le comportement d'un tel dispositif, il est possible de faire l'hypothèse

raisonnable que $|\chi_m| << 1$.

Cela implique que $J_0(\chi_m) \approx 1$ et $J_1(\chi_m) \approx \frac{\chi_m}{2}$.

L'équation (1.11) se réduit alors a :

$$E_d = \left\{ A_R + i \sum_{m=1}^{M} \frac{\chi_m}{2} e^{j\Delta\phi_m \sin(\Omega t)} \right\} e^{j(\vec{k}_R \cdot \vec{r} + \gamma)} \tag{1.12}$$

L"intensité détectée dans la direction de l'onde de référence vaut ainsi :

$$|E_d|^2 = I_R - 2I_R k_0 d |n_2| \sum_{m=1}^{M} J_0(\Delta\phi_m) I_m \sin[\Delta\phi_m \sin(\Omega t)] \tag{1.13}$$

De plus, $\sin[\Delta\phi_m \sin(\Omega t)] \approx 2J_1(\Delta\phi_m) \sin(\Omega t)$ soit :

$$|E_d|^2 = I_R - 4I_R k_0 d |n_2| \left[ \sum_{m=1}^{M} J_0(\Delta\phi_m) J_1(\Delta\phi_m) I_m \right] \sin(\Omega t) \tag{1.14}$$

Pour de faibles modulations de phase, c'est-à-dire $\Delta\phi_m << 1$, l'expression précédente peut être réduite à :

$$|E_d|^2 = I_R - 2I_R k_0 d |n_2| \left[ \sum_{m=1}^{M} \Delta\phi_m I_m \right] \sin(\Omega t) \tag{1.15}$$

Si de plus, il est considéré que chaque mode transporte la même intensité $I_0$, l'équation (1.15) devient :

$$|E_d|^2 = I_R - 2I_R k_0 d |n_2| I_0 \left[ \sum_{m=1}^{M} \Delta\phi_m \right] \sin(\Omega t) \tag{1.16}$$

Par conséquent, la contribution de chaque mode peut être mesurée de manière cohérente. La puissance du signal détecté à travers l'hologramme dynamique est proportionnelle à $\sum_{m=1}^{M} \Delta\phi_m$.

Les Demandeurs ont aussi estimé la sensibilité de détection :

Pour se faire, ils ont supposé que le bruit limitant du système est un bruit optique. Le déphasage associé à une perturbation de la fibre optique est un processus statistique.

Dans le cas d'un interféromètre classique en quadrature, la modulation de phase est convertie linéairement en modulation de puissance optique sous la forme :

$$P_{SMF}(\Delta\phi) = \alpha\Delta\phi \tag{1.17}$$

La variance associée prend alors la forme :

$$\sigma_{SMF}(\Delta\phi) = \alpha\sigma_{\Delta\phi} \tag{1.18}$$

Dans le cas d'un interféromètre adaptatif avec une fibre multimode, la puissance modulée s'écrit d'après (1.16) :

$$P_{MMF}(\Delta\phi) = \frac{\alpha}{M} \sum_{m=1}^{M} \Delta\phi_m \qquad (1.17)$$

Le facteur 1/M signifie que l'intensité est divisée spatialement sur l'ensemble des modes.
Par conséquent, la variance du signal détecté avec une fibre à M modes s'écrit :

$$\sigma_{SMF}(\Delta\phi) = \frac{\alpha}{\sqrt{M}} \sigma_{\Delta\phi} \qquad (1.18)$$

Il est possible de conclure que la variance du signal détecté avec une fibre multimode par rapport à celle obtenue avec une fibre monomode est réduite d'un facteur $\sqrt{M}$. Par conséquent, le rapport signal à bruit (RSB) pour une fibre multimode augmente avec $\sqrt{M}$.

Le rapport RSB peut être ultérieurement augmenté par une détection différentielle, par exemple avec deux photodiodes balancées, sur les ondes diffractées $E_1$ et $E_0$ (illustrés en figure 1) permettant ainsi de réduire la composante continue de l'intensité mesurée.

Premier exemple de réalisation de capteur à fibre optique distribué permettant de localiser une perturbation :

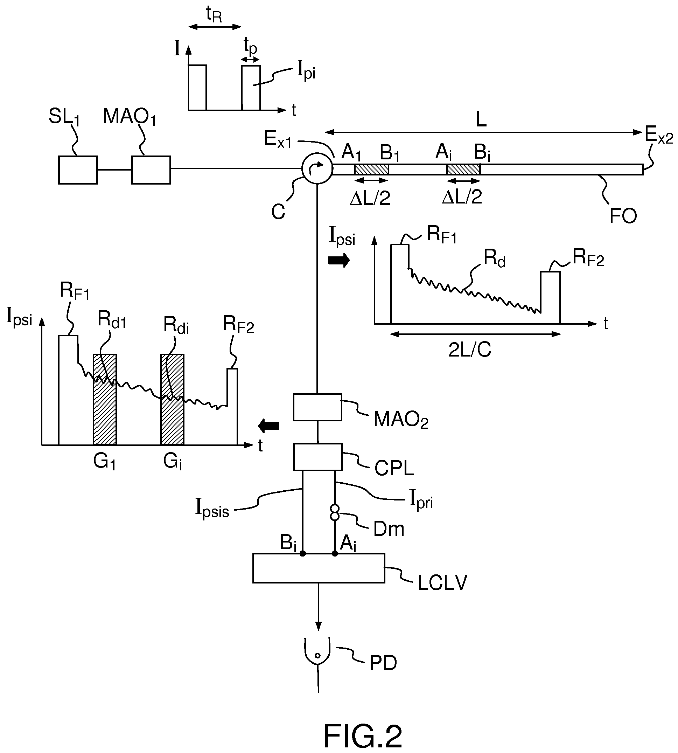

Selon ce premier exemple de configuration, le capteur à fibre optique distribué comprend une source laser $SL_1$, un modulateur acousto-optique $MAO_1$ générateur d'impulsions optiques $I_{pi}$ émises tous les $t_R$ et de durée d'impulsions $t_p$, et une fibre optique FO de longueur L. Une série d'impulsions lumineuses $I_{pi}$ de durée $t_p$ sont ainsi injectées dans ladite fibre optique via une première extrémité $E_{x1}$, se propagent le long de ladite fibre optique, sont réfléchies au niveau de la seconde extrémité $E_{x2}$, puis rétrodiffusées le long de ladite fibre, elles correspondent aux impulsions optiques de sortie $I_{psi}$ qui sont exploitées et porteuses d'information, comme illustré en figure 2. Selon cette figure, différentes zones dites sensibles sont sondées, et représentées entre les positions $A_1$ et $B_1$, puis entre les positions $A_i$ et $B_i$ au niveau de la fibre optique.
Ainsi, une impulsion introduite dans la fibre optique FO de longueur L, via un circulateur C donne lieu à une onde rétro-diffusée pendant toute la durée de l'aller-retour de l'impulsion dans la fibre, soit pendant une durée de 2xL/c. La figure 2 met en évidence, l'intensité lumineuse d'une impulsion de sortie $I_{psi}$ générée par la rétro-diffusion $R_d$, la réflexion $R_e$ par la première extrémité et par la réflexion $R_s$ par la seconde extrémité.
Un second modulateur acousto-optique $MAO_2$ est prévu en sortie de circulateur C, ainsi qu'un coupleur CPL afin de diviser les impulsions de sortie sur deux voies. Des moyens Dm permettant d'introduire un retard de longueur $\Delta$L correspondant au temps d'aller retour de la lumière dans la zone sensible de longueur $\Delta$L/2 sont insérés sur l'une des deux voies. Ce retard permet de produire sur la valve LCLV une interférence entre une onde et elle-même décalée dans le temps.
Ce décalage temporel correspond à un décalage en distance de longueur $\Delta$L/2 dans le capteur. L'onde qui passe dans la voie retardée provient de la position $A_i$ dans la fibre, l'onde qui passe dans la voie non retardée provient de la position $B_i$ dans la fibre, qui se trouve $\Delta$L/2 plus loin dans le capteur.
L'interférence des rétro-diffusions provenant des positions $A_i$ et de $B_i$ donne la différence de phase entre la rétro-diffusion venant de $A_i$ et la rétro-diffusion venant de $B_i$. Il s'agit bien de la phase subie par l'onde issue de la position $B_i$ sur la longueur $\Delta$L/2. Les figures d'interférences correspondant aux N zones sensibles dans le capteur sont d'autant plus décorrélées que la longueur de zone sensible est importante.
La superposition des N figures d'interférence ne permet pas d'inscrire un réseau dans la LCLV . En effet, la phase relative de ces figures d'interférence étant aléatoire, leur superposition diminue le contraste et brouille les franges. c'est pourquoi un modulateur acousto-optique $MAO_2$ est inséré avant la séparation de la rétro-diffusion en deux voies assuré par un coupleur CPL. Il permet d'ouvrir une porte de durée 2x$\Delta$L pour ne laisser interférer que les ondes provenant d'une zone sensible à la fois.
La figure 2 met ainsi également en évidence, l'interrogation via l'ouverture de deux portes $G_1$ et $G_i$ décalées dans le temps, et relatives à différentes impulsions optiques d'émission $I_{pi}$.
Dans ce cas, une des deux voies sert de référence avec des impulsions optiques de sortie de référence $I_{pri}$ et

l'autre voie sert de voie signal porteuses d'impulsions optiques signal $I_{psiS}$, toutes issues des impulsions optiques de sortie $I_{psi}$, les ondes optiques des deux voies interférant au niveau de la valve optique LCLV.

Cette architecture permet de localiser le long de la fibre la perturbation de phase induite par la grandeur physique à mesurer avec une résolution spatiale $\Delta L/2$. Elle est mesurée par analyse fréquentielle du signal électrique délivré par la photodiode PD.

La cadence maximale d'interrogation de deux zones sensibles différentes du capteur est limitée par le temps de réponse « off » des cristaux liquides : soit $t_{off}$, le temps de retour des cristaux liquides dans la valve optique, ce qui implique que la cadence de deux impulsions successives définie par le paramètre $t_R$ doit être supérieur au paramètre $t_{off}$.

Il convient d'attendre que les cristaux liquides impliqués dans l'inscription de la figure d'interférence de la première zone sensible soient de nouveau disponibles.

Second exemple de réalisation de capteur à fibre optique distribué permettant de localiser une perturbation :

Le second exemple de capteur à fibre distribué de l'invention comprend une architecture ayant pour but de permettre la lecture de la perturbation sur toutes les zones sensibles du capteur en un temps court. L'enjeu ici est de pouvoir reconstituer un réseau spatial de capteurs virtuels (voir définition plus haut) pour pouvoir constituer par exemple une antenne acoustique à pas reconfigurable « électroniquement » ce qui présente un avantage décisif par rapport aux solutions à capteurs répartis.

Pour cela il est nécessaire qu'un réseau « moyen » appelé « réseau statique » soit inscrit dans la LCLV. Ce réseau est obtenu par interférence de la réflexion d'une impulsion d'entrée $I_{pi}$ sur le connecteur de fin de fibre (extrémité de fibre) avec elle-même retardée de $\Delta L$. La phase est donc accumulée tout le long de la fibre. Les variations lentes de phase sur tout le long de la fibre vont modifier la figure d'interférence permettant d'inscrire ce réseau moyen. Il est alors possible d'utiliser ce réseau moyen comme réseau de diffraction pour une autre onde lumineuse. Cette tierce onde est la rétro-diffusion de l'impulsion dans la fibre.

Une impulsion lumineuse de durée $t_p$ est donc injectée dans la fibre et est rétro-diffusée dans celle-ci. Elle est également réfléchie en fin de fibre. Elle est obtenue par exemple par une source laser $SL_1$ suivie d'un modulateur acousto-optique $MAO_1$. Cette impulsion donne lieu à une onde rétro-diffusée pendant toute la durée de l'aller-retour de l'impulsion dans la fibre, soit pendant $2xL/c$. Le signal rétro-diffusé et réfléchi est séparé en deux voies, via un circulateur C et grâce à un coupleur CPL.

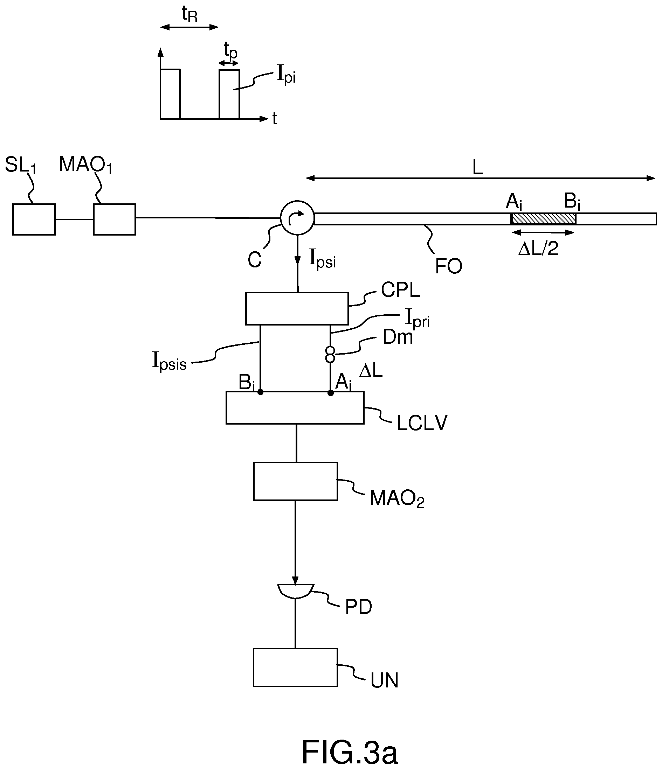

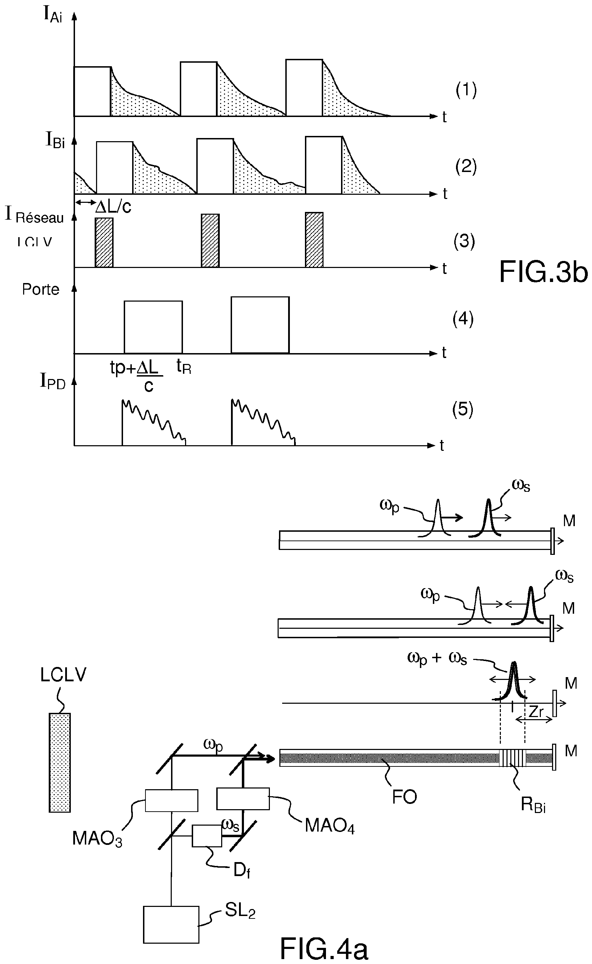

Comme dans le premier exemple de capteur, un retard de longueur $\Delta L$ correspondant au temps d'aller retour de la lumière dans la zone sensible de longueur $\Delta L/2$ est inséré dans une des deux voies par des moyens Dm. Ce retard permet de produire sur la LCLV une interférence entre une onde et elle-même décalée dans le temps. Ce décalage temporel correspond à un décalage en distance de longueur $\Delta L/2$ dans le capteur. Ce décalage temporel fixe la durée minimale de l'impulsion d'entrée $t_p > \Delta L/c$. Cette configuration est illustrée en figures 3a et 3b.

Tous les $t_r$, une nouvelle impulsion est envoyée de sorte que le réseau moyen ne s'efface pas avec $t_r > 2xL/c$ et $t_r < t_{off}$ où $t_{off}$ est le temps de retour des cristaux liquide à leur état initial.

La longueur maximale du capteur est donc liée à $t_{off}$ par :

$$L_{max} < c \times t_{off}/2.$$

Une photodiode PD est placée sur un ordre de diffraction. La diffraction de l'onde rétro-diffusée sur le réseau moyen est détectée sur la photodiode pendant toute la durée de la rétro-diffusion. Afin de ne pas saturer le détecteur, un modulateur acousto-optique $MAO_2$ est placé avant la photodiode et permet de couper les ondes réfléchies par les extrémités de la fibre correspondant aux connecteurs d'entrée et de sortie de la fibre. Contrairement au premier exemple de capteur à fibre distribué précité, le signal électrique délivré par la photodiode contient l'information de déphasage sur toute la longueur de la fibre sensible avec une résolution $\Delta L/2$ à un instant donné.

C'est la fréquence de répétition des impulsions analysée par une unité de traitement UN qui permet l'analyse fréquentielle du signal avec comme condition limite sur l'échantillonnage $f_{ac} < f_{rep/2}$, $f_{ac}$ étant la fréquence du signal de perturbation la plus élevée que l'on souhaite détecter d'après le théorème d'échantillonnage de Nyquist-Shannon qui indique qu'un échantillonnage à la fréquence Fe ne peut transmettre sans perte d'information que les fréquences inférieures à Fe/2.

La figure 3b met en exergue, la superposition temporelle d'une intensité de sortie $I_{psi}$ issue de la position $A_i$, celle issue de la position $B_i$ dans la fibre, notées $I_{Ai}$ et $I_{Bi}$, l'inscription du réseau statique, la génération de portes temporelles d'analyse et l'intensité rétro-difuusée analysée et illustrées plus précisément par :

- (1) : la courbe $I_{Ai}(t)$
- (2) : la courbe $I_{Bi}(t)$

- (3) : la courbe $I_{réseau\,LCLV}$
- (4) : la courbe Porte(t), permettant de filtrer les réflexions des extrémités de la fibre
- (5) : la courbe $I_{PD}$ (t), intensité relative à la rétro-diffusion grâce à l'utilisation d'une porte temporelle au niveau du composant $MAO_2$.

Troisième exemple de réalisation de capteur à fibre optique distribué permettant de localiser une perturbation basée sur un réseau dynamique Brillouin :

Cet exemple de réalisation comprend une architecture distribuée à base d'un réseau Brillouin dynamique comme réflecteur mobile et d'une onde optique d'interrogation comprenant une série d'impulsions optiques.

Le réseau Brillouin, généré par l'interaction entre deux impulsions optiques, permet de définir une portion de fibre optique sensible. Dans ce cas, on ne s'intéresse pas à l'aspect fréquentiel de l'interaction Brillouin stimulée mais uniquement au coefficient de réflexion du réseau dynamique. Une onde sonde permet alors de sonder la fibre optique.

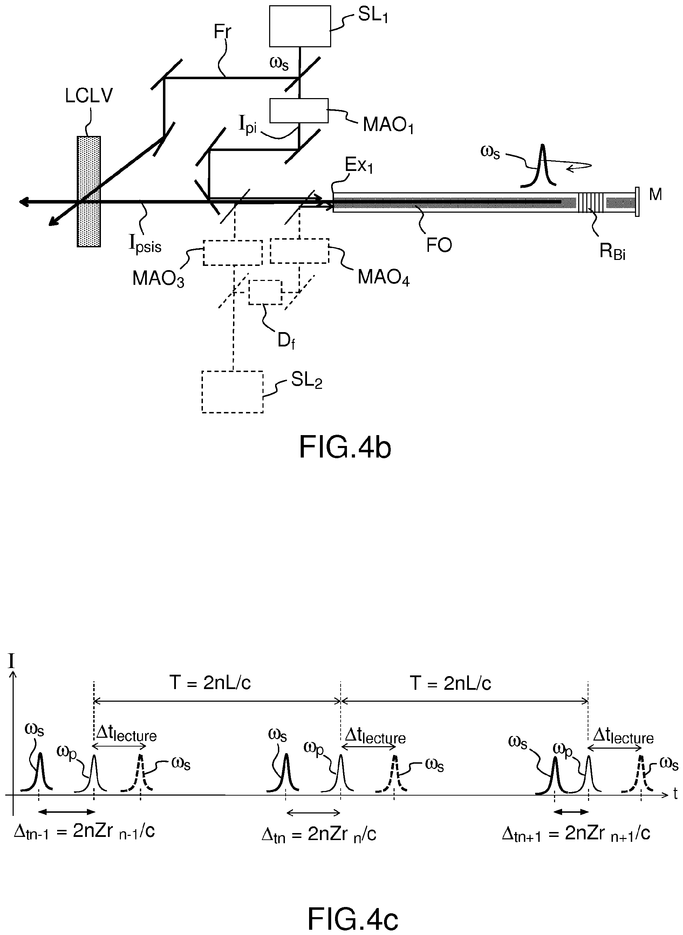

L'architecture proposée est schématisée sur les figures 4a et 4b.

La figure 4a illustre la partie des moyens nécessaires à l'étape d'écriture du réseau Brillouin $R_{Bi}$. Deux impulsions issues d'un même laser $SL_2$ de fréquence optique $\omega_p$ mais décalées temporellement et spectralement inscrivent un réseau de Bragg par Diffusion Brillouin Stimulée $R_{Bi}$. Ainsi à partir d'une unique source laser $SL_2$, il est prévu après division du faisceau laser, deux modulateurs acousto-optiques $MAO_3$ et $MAO_4$ et des moyens de décalage en fréquence Df pouvant être électro-optiques, afin de générer deux séries d'impulsions optiques aux fréquences optiques $\omega_p$ et $\omega_s$ (l'onde à la fréquence $\omega_p$ est représentée en trait fin, l'onde à la fréquence $\omega_s$ étant représentée en trait épais). Typiquement, la longueur maximale de la fibre optique L est limitée à la moitié de la longueur de cohérence $L_{coh}$ du laser utilisé.

L'onde Stokes est décalée vers les basses fréquences de $\omega_B$, la fréquence Brillouin, correspondant à l'effet Doppler : réflexion de la pompe sur un réseau mobile. Ce réseau, équivalent à un réseau de Bragg (dû à l'effet d'électrostriction entre l'onde pompe et l'onde Stokes dans la silice), se propage dans le même sens que la pompe à la vitesse du son $c_{ac}$ dans la fibre $\omega_B = 2nc_{ac}/\lambda$.

La durée des impulsions détermine la longueur du réseau. Le réseau est inscrit successivement à différentes positions $Z_r$ dans la fibre.

Sa position est contrôlée (c'est-à-dire la zone dans la fibre où la réflexion de l'impulsion à $\omega s$ croise l'impulsion à $\omega p$) par l'intervalle de temps $\Delta$ t entre les deux impulsions. En pratique, on propose d'utiliser un traitement réfléchissant M à l'extrémité de la fibre afin d'obtenir la réflexion de l'onde à $\omega$ s permettant de stimuler la diffusion Brillouin.

Ainsi, sur la première voie, le premier modulateur acousto-optique $MOA_3$ est utilisé pour obtenir les impulsions pompe. Sur la deuxième voie, la fréquence du laser est décalée d'une valeur correspondant à $\omega_B$ ($\omega_s = \omega_p - \omega_s$) soit environ 10GHz dans les fibres optiques, puis un autre modulateur acousto-optique $MAO_4$ est utilisé pour obtenir les impulsions Stokes.

La figure 4b illustre la partie des moyens nécessaires à l'étape de lecture de la phase qui consiste à utiliser ce réseau Brillouin $R_{Bi}$ comme miroir de Bragg.

Une troisième onde « sonde » issue de l'ensemble optique comprenant le laser $SL_1$ est injectée dans la fibre à une fréquence $\omega_s$ et fait un aller-retour entre l'entrée de la fibre et le réseau Brillouin $R_{Bi}$. Elle accumule un déphasage sur cet aller-retour.

Ce déphasage est le signal d'intérêt. On provoque un hologramme sur la valve LCLV entre le retour de la sonde et une référence provenant du même laser. On utilise un ensemble optique comprenant un laser $SL_1$ qui émet un faisceau laser, divisé pour générer un faisceau laser $F_r$, l'autre partie dudit faisceau étant introduite dans un modulateur acousto-optique pour générer une série d'impulsions $I_{pi}$ à la fréquence optique $\omega_s$ pour réaliser l'étape de lecture. Typiquement, la durée de vie du réseau ainsi inscrit est définie par la durée de vie des phonons acoustiques dans le matériau de la fibre optique pouvant être de manière classique, la silice, soit environ 10ns. Il est donc nécessaire de venir lire la phase dans les 10 ns suivant l'écriture. Les impulsions $I_{pi}$ introduites dans la fibre optique, génèrent en sortie de fibre des impulsions $I_{psiS}$ après réflexion au niveau du réseau Brillouin $R_{Bi}$, venant interférer avec le faisceau de référence sur la valve optique LCLV.

La figure 4c illustre l'alternance d'étapes d'écriture et d'étapes de lecture, correspondant à des variations d'inscription de réseaux Brillouin $R_{Bi}$ à différents endroits dans la fibre optique. La position du réseau Brillouin $R_{Bi}$ dans la fibre est réglée par le décalage temporel entre deux impulsions d'écriture aux fréquences $\omega_p$ et $\omega_s$.

A chaque cycle d'écriture-lecture, le spectre obtenu au cycle N est soustrait au spectre obtenu au cycle N+1 afin d'avoir accès à l'information qui a lieu dans la portion de fibre correspondant à l'interrogation (écriture/lecture) par les impulsions du cycle N.

La période du processus écriture-lecture est : $T = 2L/c = 1/f_{rep}$

On obtient le spectre Si (t, L-$Z_r$) du signal de perturbation de la phase à ti = i*T, pour le réflecteur Brillouin $R_{Bi}$ à la position L-$Z_{ri}$. Plus précisément, Si(t, L-$Z_r$) est le spectre du signal acoustique qui module la phase sur un aller-retour entre l'entrée de la fibre et le réflecteur Brillouin $R_{Bi}$ inscrit, donc sur la longueur 2x L-$Z_{ri}$.

**Revendications**

1. Capteur à fibre optique distribué d'état de contrainte dynamique, ledit capteur comprenant :

   - un ensemble optique comportant au moins un laser ($SL_1$) émettant à une longueur d'onde λ, ledit ensemble optique étant configuré pour générer une série d'impulsions optiques ($I_{pi}$) ;
   - une fibre optique (FO) présentant une première extrémité ($E_{x1}$) et une seconde extrémité ($E_{x2}$) et de longueur optique L ;
   - un système optique configuré pour :

     ◦ injecter par ladite première extrémité ($E_{x1}$) au moins ladite série d'impulsions optiques ($I_{pi}$) ;
     ◦ recevoir au niveau de ladite extrémité ($E_{x1}$) au moins une série d'impulsions optiques de sortie, une impulsion optique de sortie ($I_{psi}$) étant porteuse de l'intensité de réflexion desdites extrémités de la fibre et de l'intensité rétrodiffusée le long de ladite fibre ;
     ◦ générer au moins un faisceau de référence continu (Fr) ou des impulsions optiques de référence ($I_{pri}$) à partir dudit ensemble optique ou desdites impulsions optique de sortie ($I_{psi}$) ;
     ◦ réaliser une série de zones d'interférences correspondant à l'interférence entre ledit faisceau de référence (Fr) ou une impulsion de référence ($I_{pri}$) et une impulsion optique signal ($I_{psiS}$) issue d'une impulsion optique de sortie ($I_{psi}$) ;

   - un détecteur holographique (HD) comprenant :

     ◦ une valve optique à cristal liquide (LCLV) comprenant une couche de cristal liquide disposée entre deux substrats, un des substrats comprenant un matériau photoconducteur pour ladite longueur d'onde d'émission (λ), ladite valve (LCLV) étant disposée de sorte qu'elle recouvre au moins partiellement lesdites zones d'interférence, ladite valve étant configurée pour réaliser des hologrammes à partir desdites zones d'interférence ;
     ◦ au moins un détecteur optique (PD) configuré pour détecter des signaux optiques de sortie diffractés par lesdits hologrammes.

2. Capteur à fibre optique distribué selon la revendication 1, **caractérisé en ce que** l'ensemble optique comprenant au moins un laser émettant à une longueur d'onde À, comporte des premiers moyens pouvant être un premier modulateur acousto-optique ($MAO_1$) pour générer des impulsions optiques.

3. Capteur à fibre optique distribué selon l'une des revendications 1 ou 2, **caractérisé en ce qu'**il comporte au moins :

   - un circulateur (C) positionné :

     ◦ en sortie dudit ensemble optique comprenant au moins un laser émettant à une longueur d'onde λ ;
     ◦ en entrée de ladite fibre optique (FO) ;
     ◦ en entrée de ladite valve optique à cristal liquide (LCLV) ;

   - un coupleur (CPL) situé en sortie de ladite fibre pour créer deux voies optiques porteuses d'impulsions optiques de sortie ;
   - des moyens (Dm) pour retarder lesdites impulsions de sortie de fibre sur l'une desdites deux voies de manière à créer une voie signal porteuse d'impulsions optiques signal et une voie de référence porteuse d'impulsions optiques de référence pour générer lesdites zones d'interférences sur ladite valve optique.

4. Capteur à fibre optique distribué selon l'une des revendications 2 ou 3, **caractérisé en ce qu'**il comporte en outre :

   - des seconds moyens pouvant être un second modulateur acousto-optique ($MAO_2$) situé en sortie du circulateur (C) et en entrée du coupleur (CPL) permettant de sélectionner des portes de durée $2\Delta L/c$ avec c la vitesse de la lumière dans le vide et $\Delta L/2$ la longueur d'une zone sensible définie entre une position $A_i$ et une position $B_i$ au niveau de ladite fibre et référencée depuis ladite première extrémité, pour ne laisser interférer que des ondes rétrodiffusées provenant d'une zone sensible de ladite fibre à la fois ;
   - les moyens pour retarder lesdites impulsions de sortie introduisant une longueur supplémentaire à parcourir $\Delta L$ ;
   - les impulsions étant séparées d'une durée $t_R$, telle que $t_R > 2L/c$, la durée desdites impulsions $t_p$ étant $t_p > \Delta L/c$ et $t_R > t_{off}$ avec $t_{off}$, le temps de réponse des cristaux liquides.

**5.** Capteur à fibre optique distribué selon l'une des revendications 2 ou 3, **caractérisé en ce qu'**il comporte en outre :

- des seconds moyens pouvant être un second modulateur acousto-optique ($MAO_2$), situés en sortie de ladite valve optique et placés en entrée dudit détecteur optique, permettant de sélectionner des portes de durée $t_R$ - $(t_p + \Delta L/c)$ ;
- les moyens pour retarder lesdites impulsions introduisant une longueur supplémentaire à parcourir de $\Delta L$ avec $\Delta L/2$ la longueur d'une zone sensible définie entre une position $A_i$ et une position $B_i$ au niveau de ladite fibre et référencée depuis ladite première extrémité ;
- les impulsions sont séparées d'une durée $t_R$, telle que $t_R > 2L/c$ la durée desdites impulsions $t_p$ étant telle que $t_p > \Delta L/c$ et $t_R < t_{off}$ avec $t_{off}$, le temps de réponse des cristaux liquides ;
- lesdites portes permettant de filtrer les intensités de réflexion desdites extrémités de la fibre et conserver une partie de l'intensité rétrodiffusée le long de ladite fibre ;
- une unité de traitement numérique située en sortie de détecteur optique pour analyser les différentes zones actives sondées,

**6.** Capteur à fibre optique distribué selon l'une des revendications 1 ou 2, **caractérisé en ce qu'**il comprend en outre :

- un ensemble laser dit d'écriture comprenant au moins un laser ($SL_2$) émettant une série d'impulsions dites d'écriture à une fréquence de pompe $\omega_p$ et un faisceau laser émettant une série d'impulsions dites d'écriture à une fréquence signal $\omega_s$ différente de la fréquence $\omega_p$ ;
- le système optique étant configuré :

  ◦ pour injecter par ladite première extrémité ($E_1$) lesdites séries d'impulsions d'écriture aux fréquences $\omega p$ et $\omega s$, inscrivant au moins un élément de réseau Brillouin ($RB_i$) dans ladite fibre optique ;
  ◦ pour injecter ladite série d'impulsions issues dudit ensemble optique comportant au moins un laser ($SL_1$) émettant à une longueur d'onde $\lambda s$ correspondant à un faisceau laser de lecture à ladite fréquence signal $\omega s$ ;
  ◦ la position ($Z_r$) de l'écriture dudit élément de réseau Brillouin étant référencée par rapport à la seconde extrémité ($E_2$) de ladite fibre et étant réglée par le décalage temporel entre deux impulsions d'écriture aux fréquences $\omega_p$ et $\omega_s$.

**7.** Capteur à fibre optique distribué selon la revendication 6, **caractérisé en ce que** l'ensemble laser d'écriture comprend :

- ledit laser ($SL_2$) émettant un faisceau laser ;
- des moyens pour diviser ledit faisceau en deux voies ;
- des moyens (Df) pour décaler la fréquence pompe $\omega_p$ vers une fréquence signal $\omega_s$ sur l'une des voies ;
- des moyens pour générer des impulsions sur les deux voies optiques décalées en fréquence pouvant être de type modulateurs acousto-optiques ($MOA_3$, $MAO_4$).

**8.** Capteur à fibre optique distribué selon la revendication 7, **caractérisé en ce que** ledit système optique est configuré pour que ledit faisceau de référence ($F_r$) ou lesdites impulsions de référence ($I_{pri}$) interfére(nt) en entrée de ladite valve optique à cristal liquide sans avoir été injecté(es) dans ladite fibre optique avec lesdites impulsions optiques signal ($I_{psiS}$), issues desdites impulsions optiques injectées puis propagées dans ladite fibre.

**9.** Capteur à fibre optique distribué selon la revendication 7, **caractérisé en ce que** ledit système optique est configuré pour que ledit faisceau de référence ($F_r$) ou lesdites impulsions de référence ($I_{pri}$) interfère(nt) en entrée de ladite valve optique à cristal liquide en ayant été injecté(es) dans ladite fibre optique avec lesdites impulsions optiques signal ($I_{psiS}$), issues desdites impulsions optiques injectées puis propagées dans ladite fibre.

**10.** Capteur à fibre optique distribué selon l'une des revendications 6 à 9, **caractérisé en ce que** la seconde extrémité ($E_{x2}$) de la fibre comporte un traitement réfléchissant (M).

**11.** Capteur à fibre optique distribué selon l'une des revendications 1 à 10, **caractérisé en ce que** ladite fibre est monomode.

**12.** Capteur à fibre optique distribué selon l'une des revendications 1 à 10, **caractérisé en ce que** ladite fibre est multimode.

13. Capteur à fibre optique distribué selon l'une des revendications 1 à 12, **caractérisé en ce que** la longueur d'onde d'émission de l'ensemble optique est égale à 1,5 μm.


**Patentansprüche**

1. Verteilter Lichtwellenleitersensor zur Erfassung eines dynamischen Spannungszustandes, wobei der Sensor Folgendes beinhaltet:

   - eine optische Baugruppe, welche mindestens einen Laser (SL$_1$) beinhaltet, welcher bei einer Wellenlänge λ aussendet, wobei die optische Baugruppe konfiguriert ist, um eine Serie von optischen Impulsen (I$_{pi}$) zu erzeugen;
   - einen Lichtwellenleiter (FO), welcher ein erstes Ende (E$_{x1}$) und ein zweites Ende (E$_{x2}$) aufweist und mit optischer Länge L;
   - ein optisches System, konfiguriert zum:

     ○ Injizieren über das erste Ende (E$_{x1}$) von mindestens der Serie von optischen Impulsen (I$_{pi}$);
     ○ Empfangen an dem Ende (E$_{x1}$) von mindestens einer Serie von optischen Ausgangsimpulsen, wobei ein optischer Ausgangsimpuls (I$_{psi}$) die Reflexionsstärke der Enden des Leiters und die rückgestreute Stärke entlang des Leiters trägt;
     ○ Erzeugen von mindestens einem durchgehenden Referenzstrahl (Fr) oder von optischen Referenzimpulsen (I$_{pri}$) anhand der optischen Baugruppe oder der optischen Ausgangsimpulse (I$_{psi}$);
     ○ Schaffen einer Serie von Interferenzbereichen, welche der Interferenz zwischen dem Referenzstrahl (Fr) oder einem Referenzimpuls (I$_{pri}$) und einem optischen Signalimpuls (I$_{psis}$) entspricht, welcher aus einem optischen Ausgangsimpuls (I$_{psi}$) stammt;

   - einen holographischen Detektor (HD), Folgendes beinhaltend:

     ○ ein optisches Ventil mit Flüssigkristall (LCLV), beinhaltend eine Flüssigkristallschicht, welche zwischen zwei Substraten angeordnet ist, wobei eines der Substrate ein Fotoleitermaterial für die Sendewellenlänge (λ) beinhaltet, wobei das Ventil (LCLV) so angeordnet ist, dass es mindestens teilweise die Interferenzbereiche bedeckt, wobei das Ventil konfiguriert ist, um Hologramme anhand der Interferenzbereiche zu schaffen;
     ○ mindestens einen optischen Detektor (PD), konfiguriert zum Erkennen von optischen Ausgangssignalen, welche durch die Hologramme gebeugt werden.

2. Verteilter Lichtwellenleitersensor nach Anspruch 1, **dadurch gekennzeichnet, dass** die optische Baugruppe, welche mindestens einen Laser beinhaltet, welcher mit einer Wellenlänge λ sendet, erste Mittel beinhaltet, welche ein erster akusto-optischer Modulator (MAO$_1$) zum Erzeugen optischer Impulse sein können.

3. Verteilter Lichtwellenleitersensor nach einem der Ansprüche 1 oder 2, **dadurch gekennzeichnet, dass** er mindestens Folgendes beinhaltet:

   - einen Zirkulator (C), der folgendermaßen positioniert ist:

     ○ am Ausgang der optischen Baugruppe, welcher mindestens einen Laser beinhaltet, welcher bei einer Wellenlänge λ sendet;
     ○ am Eingang des Lichtwellenleiters (FO);
     ○ am Eingang des optischen Ventils mit Flüssigkristall (LCLV);

   - einen Koppler (CPL), welcher sich am Ausgang des Leiters befindet, um zwei optische Kanäle zu schaffen, welche optische Ausgangssignale tragen;
   - Mittel (Dm) zum Verzögern der Ausgangsimpulse des Leiters auf einem der beiden Kanäle, um so einen Signalkanal zu schaffen, welcher optische Signalimpulse trägt und einen Referenzkanal, welcher Referenz-Signalimpulse trägt, um die Interferenzbereiche am optischen Ventil zu erzeugen.

4. Verteilter Lichtwellenleitersensor nach einem der Ansprüche 2 oder 3, **dadurch gekennzeichnet, dass** er zudem Folgendes beinhaltet:

- zweite Mittel, welche ein zweiter am Ausgang des Zirkulators (C) und am Eingang des Kopplers (CPL) befindlicher akusto-optischer Modulator (MAO$_2$) sein können, welche die Auswahl von Gates mit einer Dauer $2\Delta L/c$ ermöglichen, wobei c, die Lichtgeschwindigkeit im Vakuum und $\Delta L/2$, die Länge eines empfindlichen Bereichs ist, welcher zwischen einer Position A$_i$ und einer Position B$_i$ an dem Leiter definiert ist und von dem ersten Ende aus referenziert ist, um nur rückgestreute Wellen, welche von einem einzigen empfindlichen Bereich der Faser gleichzeitig stammen, interferieren zu lassen;
- die Mittel zum Verzögern der Ausgangsimpulse, welche eine zusätzliche zu durchquerende Länge $\Delta L$ einführen;
- wobei die Impulse um eine Dauer $t_R$ getrennt sind, so dass $t_R > 2L/c$, wobei die Dauer der Impulse $t_p$ gleich $t_p > \Delta L/c$ und $t_R > t_{off}$ beträgt, wobei $t_{off}$ die Ansprechzeit der Flüssigkristalle ist.

5. Verteilter Lichtwellenleitersensor nach einem der Ansprüche 2 oder 3, **dadurch gekennzeichnet, dass** er zudem Folgendes beinhaltet:

- zweite Mittel, welche ein zweiter akusto-optischer Modulator (MAO$_2$), sein können, befindlich am Ausgang des optischen Ventils und platziert am Eingang des optischen Detektors, welche die Auswahl von Gates mit einer Dauer $t_R - (t_p+\Delta L/c)$ ermöglichen;
- die Mittel zum Verzögern der Ausgangsimpulse, welche eine zusätzliche zu durchquerende Länge von $\Delta L$ einführen, wobei $\Delta L/2$ die Länge eines empfindlichen Bereichs ist, welcher zwischen einer Position A$_i$ und einer Position B$_i$ an dem Leiter definiert ist und von dem ersten Ende aus referenziert ist;
- wobei die Impulse um eine Dauer $t_R$ getrennt sind, so dass $t_R > 2L/c$, wobei die Dauer der Impulse $t_p$ so gestaltet ist, dass $t_p > \Delta L/c$ und $t_R < t_{off}$ beträgt, wobei $t_{off}$ die Ansprechzeit der Flüssigkristalle ist;
- wobei die Gates es ermöglichen, die Reflexionsstärken der Enden des Leiters zu filtern und einen Teil der rückgestreuten Stärke entlang des Leiters beizubehalten;
- eine digitale Verarbeitungseinheit, befindlich am Ausgang des optischen Detektors, zur Analyse der unterschiedlichen sondierten aktiven Bereiche.

6. Verteilter Lichtwellenleitersensor nach einem der Ansprüche 1 oder 2, **dadurch gekennzeichnet, dass** er zudem Folgendes beinhaltet:

- eine Laserbaugruppe, genannt Schreibbaugruppe, beinhaltend mindestens einen Laser (SL$_2$), welcher eine Serie von Impulsen, genannt Schreibimpulse, bei einer Pumpfrequenz $\omega_p$ aussendet und einen Laserstrahl, welcher eine Serie von Schreibimpulsen genannten Impulsen bei einer Signalfrequenz $\omega_s$ aussendet, welche sich von der Frequenz $\omega_p$ unterscheidet;
- wobei das optische System konfiguriert ist:

  ◦ um über das erste Ende (E$_1$) die Serien von Schreibimpulsen bei den Frequenzen $\omega_p$ und $\omega_s$ zu injizieren, welche mindestens ein Brillouin-Netzwerkelement (RB$_i$) in den Lichtwellenleiter schreiben;
  ◦ um die Impulsserie zu injizieren, welche aus der optischen Baugruppe stammt, welche mindestens einen Laser (SL$_1$) beinhaltet, welcher mit einer Wellenlänge $\lambda s$ sendet, welche einem Lese-Laserstrahl bei der Signalfrequenz $\omega_s$ entspricht;
  ◦ wobei die Schreib-Position (Z$_r$) des Brillouin-Netzwerkelementes in Bezug auf das zweite Ende (E$_2$) des Leiters referenziert ist und durch zeitliche Verschiebung zwischen zwei Schreibimpulsen bei den Frequenzen $\omega_p$ und $\omega_s$ eingestellt wird.

7. Verteilter Lichtwellenleitersensor nach Anspruch 6, **dadurch gekennzeichnet, dass** der Schreib-Laser Folgendes beinhaltet:

- den Laser (SL$_2$), welcher einen Laserstrahl aussendet;
- Mittel zum Teilen des Strahls in zwei Kanäle;
- Mittel (Df) zum Verschieben der Pumpfrequenz $\omega_p$ in Richtung einer Signalfrequenz $\omega_s$ auf einem der Kanäle;
- Mittel zum Erzeugen von Impulsen auf den beiden in Bezug auf die Frequenz verschobenen optischen Kanälen, welche Mittel vom Typ akusto-optischer Modulatoren (MOA$_3$, MAO$_4$) sein können.

8. Verteilter Lichtwellenleitersensor nach Anspruch 7, **dadurch gekennzeichnet, dass** das optische System konfiguriert ist, damit der Referenzstrahl (F$_r$) oder die Referenzimpulse (I$_{pri}$) im Eingang des optischen Ventils mit Flüssigkristall, ohne in den Lichtwellenleiter injiziert worden zu sein, mit denjenigen optischen Signalimpulsen (I$_{psiS}$) interferiert/interferieren, welche den in den Leiter injizierten und anschließend darin fortgepflanzten optischen Impulsen entstammen.

**9.** Verteilter Lichtwellenleitersensor nach Anspruch 7, **dadurch gekennzeichnet, dass** das optische System konfiguriert ist, damit der Referenzstrahl ($F_r$) oder die Referenzimpulse ($I_{pri}$) im Eingang des optischen Ventils mit Flüssigkristall, indem sie in den Lichtwellenleiter injiziert wurden, mit denjenigen optischen Signalimpulsen ($I_{psiS}$) interferiert/interferieren, welche den in den Leiter injizierten und anschließend darin fortgepflanzten optischen Impulsen entstammen.

**10.** Verteilter Lichtwellenleitersensor nach einem der Ansprüche 6 bis 9, **dadurch gekennzeichnet, dass** das zweite Ende ($E_{x2}$) der Faser eine reflektierende Behandlung (M) beinhaltet.

**11.** Verteilter Lichtwellenleitersensor nach einem der Ansprüche 1 bis 10, **dadurch gekennzeichnet, dass** der Leiter ein Monomode-Leiter ist.

**12.** Verteilter Lichtwellenleitersensor nach einem der Ansprüche 1 bis 10, **dadurch gekennzeichnet, dass** der Leiter ein Multimode-Leiter ist.

**13.** Verteilter Lichtwellenleitersensor nach einem der Ansprüche 1 bis 12, **dadurch gekennzeichnet, dass** die Sendewellenlänge der optischen Baugruppe gleich 1,5 $\mu$m ist.

**Claims**

**1.** A distributed optical fiber sensor for sensing dynamic stress state, said sensor comprising:

- an optical assembly comprising at least one laser ($SL_1$) emitting at a wavelength $\lambda$, said optical assembly being configured to generate a series of optical pulses ($I_{pi}$);
- an optical fiber (FO) exhibiting a first end ($E_{x1}$) and a second end ($E_{x2}$) and of optical length L;
- an optical system configured to:

  ○ inject through said first end ($E_{x1}$) at least said series of optical pulses ($I_{pi}$);
  ○ receive at said end ($E_{x1}$) at least one series of output optical pulses, an output optical pulse ($I_{psi}$) being a carrier of the intensity of reflection of said ends of the fiber and of the backscattered intensity along said fiber;
  ○ generate at least one continuous reference beam (Fr) or reference optical pulses ($I_{pri}$) on the basis of said optical assembly or of said output optical pulses ($I_{psi}$);
  ○ produce a series of interference zones corresponding to the interference between said reference beam (Fr) or a reference pulse ($I_{pri}$) and a signal optical pulse ($I_{psiS}$) arising from an output optical pulse ($I_{psi}$);

- a holographic detector (HD) comprising:

  ○ a liquid-crystal optical valve (LCLV) comprising a liquid crystal layer disposed between two substrates, one of the substrates comprising a photoconductor material for said emission wavelength ($\lambda$), said valve (LCLV) being disposed so that it at least partially covers said interference zones, said valve being configured to produce holograms on the basis of said interference zones;
  ○ at least one optical detector (PD) configured to detect output optical signals diffracted by said holograms.

**2.** The distributed optical fiber sensor according to claim 1, **characterized in that** the optical assembly comprising at least one laser emitting at a wavelength $\lambda$, comprises first means which may be a first acousto-optical modulator ($MAO_1$) for generating optical pulses.

**3.** The distributed optical fiber sensor according to one of claims 1 or 2, **characterized in that** it comprises at least:

- a circulator (C) positioned:

  ○ at the output of said optical assembly comprising at least one laser emitting at a wavelength $\lambda$;
  ○ at the input of said optical fiber (FO);
  ○ at the input of said liquid-crystal optical valve (LCLV);

- a coupler (CPL) situated at the output of said fiber so as to create two optical pathways carrying output optical pulses;

- means (Dm) for delaying said fiber output pulses on one of said two pathways so as to create a signal pathway carrying signal optical pulses and a reference pathway carrying reference optical pulses so as to generate said interference zones on said optical valve.

4. The distributed optical fiber sensor according to one of claims 2 or 3, **characterized in that** it furthermore comprises:

- second means which may be a second acousto-optical modulator ($MAO_2$) situated at the output of the circulator (C) and at the input of the coupler (CPL) making it possible to select gates of duration $2\Delta L/c$ with c the speed of light in vacuum and $\Delta L/2$ the length of a sensitive zone defined between a position $A_i$ and a position $B_i$ at said fiber and referenced from said first end, so as to allow only backscattered waves originating from a sensitive zone of said fiber to interfere one at a time;
- the means for delaying said output pulses introducing an additional length to be traversed $\Delta L$;
- the pulses being separated by a duration $t_R$, such that $t_R > 2L/c$, the duration of said pulses $t_p$ being $t_p > \Delta L/c$ and $t_R > t_{off}$ with $t_{off}$ the response time of the liquid crystals.

5. The distributed optical fiber sensor according to one of claims 2 or 3, **characterized in that** it furthermore comprises:

- second means which may be a second acousto-optical modulator ($MAO_2$), situated at the output of said optical valve and placed at the input of said optical detector, making it possible to select gates of duration $t_R - (t_p+\Delta L/c)$;
- the means for delaying said pulses introducing an additional length to be traversed of $\Delta L$ with $\Delta L/2$ the length of a sensitive zone defined between a position $A_i$ and a position $B_i$ at said fiber and referenced from said first end;
- the pulses are separated by a duration $t_R$, such that $t_R > 2L/c$, the duration of said pulses $t_p$ being such that $t_p > \Delta L/c$ and $t_R < t_{off}$ with $t_{off}$, the response time of the liquid crystals;
- said gates making it possible to filter the intensities of reflection of said ends of the fiber and to preserve a part of the backscattered intensity along said fiber;
- a digital processing unit situated at the optical detector output to analyze the various probed active zones.

6. The distributed optical fiber sensor according to one of claims 1 or 2, **characterized in that** it furthermore comprises:

- a so-called writing laser assembly comprising at least one laser ($SL_2$) emitting a series of so-called writing pulses at a pump frequency $\omega_p$ and a laser beam emitting a series of so-called writing pulses at a signal frequency $\omega_s$ different from the frequency $\omega_p$;
- the optical system being configured:

  ∘ to inject through said first end ($E_1$) said series of writing pulses at the frequencies $\omega_p$ and $\omega_s$, inscribing at least one Brillouin grating element ($RB_i$) in said optical fiber;
  ∘ to inject said series of pulses arising from said optical assembly comprising at least one laser ($SL_1$) emitting at a wavelength $\lambda s$ corresponding to a reading laser beam at said signal frequency $\omega_s$;
  ∘ the position ($Z_r$) of the writing of said Brillouin grating element being referenced with respect to the second end ($E_2$) of said fiber and being adjusted through the temporal shift between two writing pulses at the frequencies $\omega_p$ and $\omega_s$.

7. The distributed optical fiber sensor according to claim 6, **characterized in that** the writing laser assembly comprises:

- said laser ($SL_2$) emitting a laser beam;
- means for dividing said beam into two pathways;
- means (Df) for shifting the pump frequency $\omega_p$ toward a signal frequency $\omega_s$ on one of the pathways;
- means for generating pulses on the two frequency-shifted optical pathways which may be of acousto-optical modulators type ($MOA_3$, $MAO_4$).

8. The distributed optical fiber sensor according to claim 7, **characterized in that** said optical system is configured such that said reference beam ($F_r$) or said reference pulses ($I_{pri}$) interferes or interfere at the input of said liquid-crystal optical valve without it or them having been injected into said optical fiber with said signal optical pulses ($I_{psiS}$), arising from said optical pulses injected then propagated in said fiber.

9. The distributed optical fiber sensor according to claim 7, **characterized in that** said optical system is configured such that said reference beam ($F_r$) or said reference pulses ($I_{pri}$) interferes or interfere at the input of said liquid-crystal optical valve, it or they having been injected into said optical fiber with said signal optical pulses ($I_{psiS}$), arising from said optical pulses injected then propagated in said fiber.

10. The distributed optical fiber sensor according to one of claims 6 to 9, **characterized in that** the second end ($E_{x2}$) of the fiber comprises a reflecting treatment (M).

11. The distributed optical fiber sensor according to one of claims 1 to 10, **characterized in that** said fiber is single-mode.

12. The distributed optical fiber sensor according to one of claims 1 to 10, **characterized in that** said fiber is multimode.

13. The distributed optical fiber sensor according to one of claims 1 to 12, **characterized in that** the emission wavelength of the optical assembly is equal to 1.5 $\mu$m.

$E_S e^{i(\vec{k}_S.\vec{r}-\omega_S t)}$

$E_R e^{i(\vec{k}_R.\vec{r}-\omega_R t)}$

Pc

CL

$E_2$

$E_1$

$E_0$

$E_{-1}$

$E\ell_1$

$V_0$

$E\ell_2$

FIG.1

FIG.2

FIG.3a

FIG.3b

FIG.4a

FIG.4b

FIG.4c

## RÉFÉRENCES CITÉES DANS LA DESCRIPTION

**Documents brevets cités dans la description**

- US 7668411 B2
- US 4536861 A

**Littérature non-brevet citée dans la description**

- **FARRIES, M.C. ; FERMANN, M.E. ; POOLE, S.B. ; TOWNSEND, J.E.** Distributed Temperature Sensor Using Holmium 3+ Doped Fiber. *Proceedings of OFC,* 19 Janvier 1987
- **QIN, Z. ; CHEN L. ; BAO, X.** Wavelet denoising method for improving detection performance of distributed vibration sensor. *IEEE Photonics Technol. Lett.,* 2012, vol. 24, 542-544
- **M.D. MERMELSTEIN ; A. TVETEN ; C.K. KIRKENDALL ; A. DANDRIDGE.** Double-Pulse Heterodyne Rayleigh Backscattering in an Acoustically Driven Single-Mode Optical Fiber. *NRL-FR-9932,* 1999
- **HORIGUCHI T ; SHIMIZU K ; KURASHIMA T ; TATEDA M ; KOYAMADA Y.** Development of a distributed sensing Technique using Brillouin scattering. *Journal of Lightwave Technology,* 1995, vol. 13 (7), 1296-1302
- **HORIGUCHI T ; KURASHIMA T ; TATEDA M.** A technique to measure distributed strain in optical fibers. *IEEE Photonics Technology Letters,* 1990, vol. 2 (5), 352-354
- **NIKLES M ; THEVENAZ L ; ROBERT P A.** Simple distributed fiber sensor based on Brillouin gain spectrum analysis. *Optics Letters,* 1996, vol. 21 (10), 758-760

- **HOTATE, K. ; HASEGAWA, T.** Measurement of Brillouin gain spectrum distribution along an optical fiber with a high spatial resolution using a correlation-based technique-Proposal, experiment and simulation. *IEICE Trans. Electron.,* 2000, vol. E83-C, 405-411
- **KAMSHILIN, A. A. ; ROMASHKO, R. V. ; KULCHIN, Y. N.** Adaptive interferometry with photorefractive crystal. *J. Appl. Phys.,* 2009, vol. 105, 031101
- **SALVATORE DI GIROLAMO ; ALEXEI A. KAMSHILIN ; ROMAN V. ROMASHKO ; YURIY N. KULCHIN ; JEAN C. LAUNAY.** Sensing of multi-mode-fiber strain by a dynamic photorefractive hologram. *Opt. Lett.,* 2007, vol. 32, 1821-1823
- **BORTOLOZZO, U. ; RESIDORI, S. ; HUIGNARD, J. P.** Picometer detection by adaptive holographic interferometry in a liquid-crystal light valve,. *Opt. Lett.,* 2009, vol. 34, 2006-2008
- **BORTOLOZZO, U. ; RUBIN, J. ; RESIDORI, S. ; HUIGNARD, J. P.** Sagnac interferometer with adaptive nonlinear detection,. *Opt. Lett.,* 2011, vol. 36, 520